# FASCICULE DE BREVET EUROPEEN

(11) **EP 3 648 162 B1**
(45) Date de publication et mention de la délivrance du brevet: **15.07.2026**
(21) Numéro de dépôt: 19205794.1
(22) Date de dépôt: 29.10.2019
(51) Int. Cl.: G06F 21/73, H04L 9/32, H10W 42/40

(54) **PROCÉDÉ DE FABRICATION D'UN MOYEN DE SÉCURISATION D'UN CIRCUIT INTÉGRÉ LORS DE LA RÉALISATION DE CELUI-CI**
HERSTELLUNGSVERFAHREN EINES SICHERUNGSMITTELS FÜR EINEN INTEGRIERTEN SCHALTKREIS WÄHREND DESSEN HERSTELLUNG
FABRICATION PROCESS OF A SECURISATION MEANS FOR AN INTEGRATED CIRCUIT DURING PRODUCTION OF THE LATTER

(30) Priorité: 30.10.2018 FR 1860030
(43) Date de publication de la demande: 06.05.2020
(73) Titulaire: Commissariat à l'Energie Atomique et aux Energies Alternatives, 75015 Paris (FR)
(72) Inventeur: LANDIS, Stefan, 38054 GRENOBLE CEDEX 09 (FR); TEYSSEDRE, Hubert, 38054 GRENOBLE CEDEX 09 (FR)
(74) Mandataire: Santarelli

(56) Documents cités:
- EP-A2- 2 876 680
- US-A1- 2014 042 627
- US-A1- 2014 203 448
- US-A1- 2015 084 193
- US-A1- 2015 235 964

## Description

### DOMAINE TECHNIQUE

La présente invention concerne le domaine de sécurisation de circuits intégrés, notamment par des fonctions physiques non-clonables.

### ÉTAT DE LA TECHNIQUE ANTÉRIEURE

Actuellement, la contrefaçon des circuits intégrés pose un problème majeur pour les constructeurs et utilisateurs. Pour lutter contre cette contrefaçon, on cherche à trouver des moyens pour discriminer entre un circuit légitime et un circuit contrefait.

Une première solution consisterait à attribuer un identifiant unique pour chaque circuit intégré et à construire une base de données des identifiants légitimes. Cette solution n'est pas très viable car il s'avère assez simple d'émuler (ou de rejouer) un identifiant valide au moyen d'une verrue matérielle ou logicielle.

Une solution plus efficace consiste à utiliser un mécanisme de défi-réponse qui permet de réaliser une authentification en se protégeant de l'attaque par émulation (rejeu). Cette technique repose sur l'utilisation d'une fonction pour calculer la réponse à partir du défi. La fonction doit être unique pour chaque circuit intégré et non clonable. En effet, un attaquant ne doit pas être capable de recréer physiquement ou de cloner une telle fonction. Ce genre de fonctions est appelé « fonction physique non clonable » PUF (Physical Unclonable Function).

On connaît dans l'art antérieur des circuits intégrés comprenant différentes sortes de PUFs exploitant les dispersions fonctionnelles inhérentes aux circuits.

Une première technique de PUFs exploite la variabilité induite sur les temps de propagation des signaux aux limites des contraintes électroniques du circuit. Un premier exemple est un circuit intégré comprenant un PUF à arbitre consistant à insérer des signaux électriques en entrée d'un long chemin de circuits combinatoires et à détecter le signal le plus rapide. Une course est établie dans le circuit entre les différents signaux qui se propagent suivant différents chemins combinatoires et le signal qui arrive en premier est détecté par l'arbitre. Les signaux électriques en entrée définissent le challenge ou défi et le signal détecté en premier définit la réponse.

Un autre exemple est le PUF à oscillateur en anneaux décrit dans le document de Gassend et al. Intitulé « Silicon Random Functions »; proceedings of the Computer and Communications Security Conference, Nov. 2002*.* Ce PUF est composé de plusieurs boucles de délais oscillant à des fréquences spécifiques et qui commandent des compteurs. Les boucles sont disposées de façons identiques mais les dispersions technologiques inhérentes conduisent à des boucles de fréquences légèrement différentes. Ainsi, les compteurs commandés par les boucles sont utilisés pour produire les bits de réponse à un défi.

Une deuxième technique de PUFs exploite les instabilités au démarrage. Par exemple, les mémoires SRAM, déjà présentes dans une grande majorité de circuits, peuvent être utilisées comme des PUFs. Le principe de base est de récupérer l'état de la mémoire au démarrage qui est normalement unique. Sur un même principe, le PUF peut être implémenté par des circuits papillons (butterfly) réalisés à partir des matrices de deux verrouillages croisés où l'état du point mémoire au démarrage est indéterminé. Cette technique est décrite dans le document de Kumar et al. intitulé « The Butterfly PUF : Protecting IP on every FPGA ; Workshop on Cryptographic Hardware and Embedded Systems (CHES), Sep 2007, Vienna*.* Dans le même genre, on trouve également des circuits à anneaux bistables composés d'un nombre impair d'inverseurs et ayant aussi un état indéterminé au démarrage.

Une troisième technique de PUFs exploite les dispersions technologiques des résistances dans un circuit. Une telle technique est décrite dans le document de R Helinski et al. intitulé « A Physical Unclonable Function Defined Using Power Distribution System Equivalent Resistance Variations » ; DAC 2009*.* Plus particulièrement, les auteurs proposent de mesurer la chute de tension dans un circuit intégré entre des plans d'alimentation et des plans de masse due aux dispersions technologiques des résistances définies par les pistes conductrices et les interconnexions du circuit. La chute de tension est proportionnelle au courant mesuré dans des inverseurs en court-circuit agencés sur toute la surface du circuit.

Toutefois, tous les PUFs décrits ci-dessus sont basés sur des fonctionnements aux limites des contraintes électroniques des circuits et sont par conséquent, très sensibles aux variations environnementales. En particulier, des changements de températures, de tensions d'alimentation ou des interférences électromagnétiques peuvent affecter leur performance en diminuant leur robustesse et en augmentant leur volatilité (i.e. leur variabilité intra-circuit). Ainsi, pour un défi constant, le PUF peut retourner des résultats différents selon les conditions environnementales impliquant le fait qu'un circuit légitime peut éventuellement être déclaré comme étant contrefait.

Un autre problème concerne le vieillissement du circuit intégré. En effet, à cause d'un fonctionnement aux limites des contraintes électroniques, le moindre petit défaut qui peut survenir lors du vieillissement du circuit fait que le PUF ne répond plus de la même manière et par conséquent, on ne peut plus identifier le circuit intégré.

Pour pallier à ces défauts, il est souvent nécessaire d'adjoindre au PUF un circuit de post-traitement de la réponse reçue qui est coûteux en termes d'empreinte et de consommation.

Il existe une autre technique décrite dans le document US2014/0042627 qui consiste, lors de la réalisation d'un circuit intégré, à obstruer aléatoirement lors d'une étape de gravure une partie de trous d'interconnexion en formant ainsi un ensemble de trous d'interconnexion aléatoire. Plus particulièrement, la technique décrite dans ce document consiste à utiliser un copolymère diphasique qui se polymérise directement sur le circuit intégré pour former des particules permettant de créer des contacts électriques selon différentes valeurs de résistance.

Toutefois, ce genre de polymérisation dépend de la géométrie et de la nature de la couche sur laquelle le copolymère est déposé et n'assure pas un caractère très aléatoire de la distribution des valeurs résistives.

L'art antérieur comprend également la demande de brevet US2014/203448.

L'objet de la présente invention est de proposer un procédé de personnalisation ou de sécurisation d'un circuit intégré remédiant aux inconvénients précités, en particulier en réalisant un PUF à caractère très aléatoire ne dépendant pas de la géométrie et de la nature des couches du circuit intégré tout en étant quasiment insensible aux variations de conditions environnementales sans l'adjonction d'un circuit de post-traitement coûteux, et sans l'introduction de modifications notables dans le procédé de fabrication du circuit.

### EXPOSÉ DE L'INVENTION

Cet objectif est atteint avec un procédé de sécurisation d'un circuit intégré lors de sa réalisation. L'étendue de l'invention est définie par les revendications en annexe. Selon un mode de réalisation, ledit procédé comporte les étapes suivantes :
- délimitation dudit circuit intégré en une première zone dite zone standard et en une deuxième zone dite zone de sécurité, ladite zone standard comprenant au moins deux niveaux de pistes conductrices connectées entre elles et à des composants électroniques via des interconnexions métalliques,
- introduction d'une couche de résine chargée en particules contaminantes configurées pour obstruer aléatoirement lors d'une étape de gravure de la zone de sécurité une partie de trous d'interconnexion prévus dans ladite zone de sécurité formant ainsi un ensemble de trous d'interconnexion aléatoire, et
- métallisation dudit ensemble de trous d'interconnexion aléatoire de la zone de sécurité pour former une structure d'interconnexion aléatoire adaptée pour que sa continuité électrique puisse être testée, définissant ainsi une fonction physique non-clonable, ladite structure d'interconnexion aléatoire étant formée entre au moins deux niveaux de motifs conducteurs aux mêmes niveaux que les pistes conductrices dans la zone standard.

Ceci permet d'identifier et de sécuriser le circuit intégré de manière robuste et insensible aux variations de conditions environnementales. Contrairement à l'art antérieur, ce procédé n'exploite pas des moyens non maitrisés dans le fonctionnement électrique du circuit mais dans la réalisation matérielle de la structure d'interconnexion elle-même tout en étant indépendant de la géométrie et de la nature des couches du circuit intégré et en n'introduisant qu'un nombre minimal d'étapes supplémentaires par rapport à un procédé de fabrication standard. De plus, du fait que la réalisation de la structure aléatoire d'interconnexion est non maitrisée, le coût de clonage devient excessivement élevé et la rétro-ingénierie, autant par imagerie que par apprentissage, est extrêmement difficile.

Avantageusement, les particules contaminantes sont des nanoparticules constituées d'un matériau de type diélectrique ou métallique sélectionné parmi les matériaux suivants : silicium, dioxyde de silicium SiO2, métal TiN.

Ceci permet d'avoir des particules compatibles avec la couche chargée en particules contaminantes tout en étant adaptées pour être utilisées en salle-blanche.

Avantageusement, les particules contaminantes présentent un diamètre sensiblement égal ou supérieur à celui des trous d'interconnexion.

Ceci permet de minimiser le nombre de trous partiellement obstrués. On notera que la taille des particules peut également être invariablement plus grande ou plus petite que les trous d'interconnexion.

Avantageusement, les particules contaminantes présentent une concentration comprise entre environ 0,1% à 20% en masse sélectionnée selon la taille des particules.

Ceci permet d'avoir une concentration suffisamment faible pour ne pas obstruer l'intégralité des trous d'interconnexion tout en obstruant un nombre optimal de ces trous.

Avantageusement, la sécurisation du circuit intégré s'intègre au niveau de la réalisation de premières interconnexions électriques et comporte les étapes suivantes :
- réalisation d'un premier niveau de motifs conducteurs sur la surface desdites zones standard et de sécurité,
- dépôt sur la surface du premier niveau de motifs conducteurs d'une première multicouche comprenant une barrière à une diffusion métallique ainsi qu'un masque de gravure,
- dépôt sur la surface de la première multicouche d'une deuxième multicouche de résine photosensible comprenant ladite couche de résine chargée en particules contaminantes,
- lithographie optique dans la zone de sécurité pour isoler les trous d'interconnexion prévus dans cette zone de sécurité, la zone standard restant protégée par la deuxième multicouche,
- transfert des trous d'interconnexion de la zone de sécurité non obstrués ou obstrués par des particules contaminantes dans le masque de gravure,
- nettoyage de la surface des zones standard et de sécurité pour retirer la deuxième multicouche.

Les différentes étapes ci-dessus montrent que la partie aléatoire est dans le procédé de fabrication et non pas dans des masques ou gravures différentes. En outre, l'ensemble des étapes successives sont régulées et contrôlées afin d'assurer une variabilité extrêmement faible des paramètres clé de fonctionnalité des circuits intégrés.

Avantageusement, la deuxième multicouche comprend une première couche de masque de gravure de type couche organique carbonée « SOC », une deuxième couche de masque de gravure de type couche organique enrichie en silicium « SiARC » et une troisième couche de résine photosensible, les particules contaminantes étant comprises dans ladite première couche de masque de gravure SOC.

Ceci permet de réduire encore davantage le nombre d'étapes tout en assurant un caractère très aléatoire.

Le procédé comporte en outre les étapes suivantes :
- dépôt sur la surface des zones standard et de sécurité d'au moins une troisième multicouche de résine photosensible,
- lithographie optique dans la zone standard pour isoler les trous d'interconnexion prévus dans la zone standard,
- transfert des trous d'interconnexion de la zone standard dans le masque de gravure,
- re-nettoyage de la surface des zones standard et de sécurité pour retirer la troisième multicouche de résine photosensible,
- transfert dans la couche de barrière à diffusion métallique et remplissage par un métal des trous d'interconnexion dans les zones standard et de sécurité, et
- réalisation d'un deuxième niveau de motifs conducteurs sur la surface des zones standard et de sécurité.

Avantageusement, le procédé comporte une application d'une tension supérieure à une tension de lecture pour claquer des interconnexions partielles fragiles.

Ceci permet de supprimer les contacts fragiles et ainsi de quasiment supprimer toute variation par vieillissement.

Avantageusement, la structure d'interconnexion aléatoire modélise une continuité électrique aléatoire interrogeable par un protocole d'authentification défi-réponse, ladite structure d'interconnexion aléatoire étant formée entre au moins deux niveaux correspondants de motifs conducteurs, une partie des motifs conducteurs étant configurée pour recevoir un défi, tandis qu'une autre partie des motifs conducteurs est configurée pour fournir la réponse audit défi.

Ceci permet de réaliser une authentification très sécurisée et protégée contre des attaques par rejeu.

Avantageusement, le procédé comporte la réalisation d'une pluralité de structures d'interconnexion aléatoire entre au moins deux niveaux de motifs conducteurs.

Ceci permet de sécuriser davantage le circuit intégré par la technique de défi-réponse.

Selon un autre mode de réalisation de la présente invention, la sécurisation du circuit intégré est réalisée au niveau de la fabrication de circuits logiques (front-end).

L'invention concerne également un circuit intégré sécurisé pouvant être obtenu à l'aide d'un procédé selon l'invention.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
Les Figs. 1A et 1B illustrent de manière très schématique un procédé de sécurisation d'un circuit intégré, selon un mode de réalisation de l'invention ;
La Fig. 2 illustre de manière très schématique une vue en coupe d'un circuit intégré sécurisé réalisé par le procédé de sécurisation selon un mode de réalisation de l'invention ; et
Les Figs. 3A-3J illustrent de manière très schématique des étapes d'un procédé de sécurisation d'un circuit intégré, selon un mode de réalisation préféré de l'invention.

### EXPOSÉ DÉTAILLÉ DE MODES DE RÉALISATION PARTICULIERS

Le concept à la base de l'invention est l'obstruction aléatoire et volontaire de trous de connexions lors de sa réalisation d'un niveau d'interconnexion métallique par l'introduction contrôlée d'une couche chargée d'un contaminant particulaire.

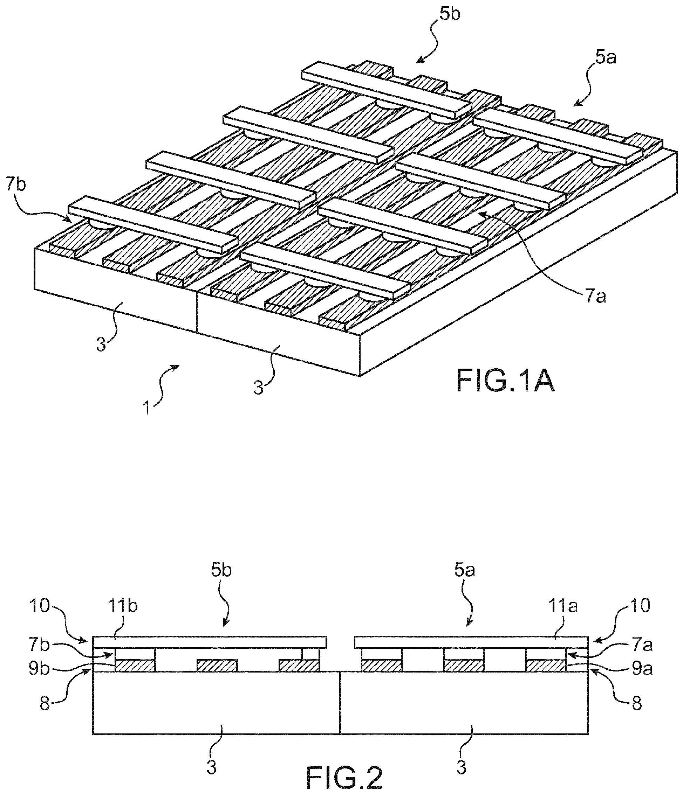

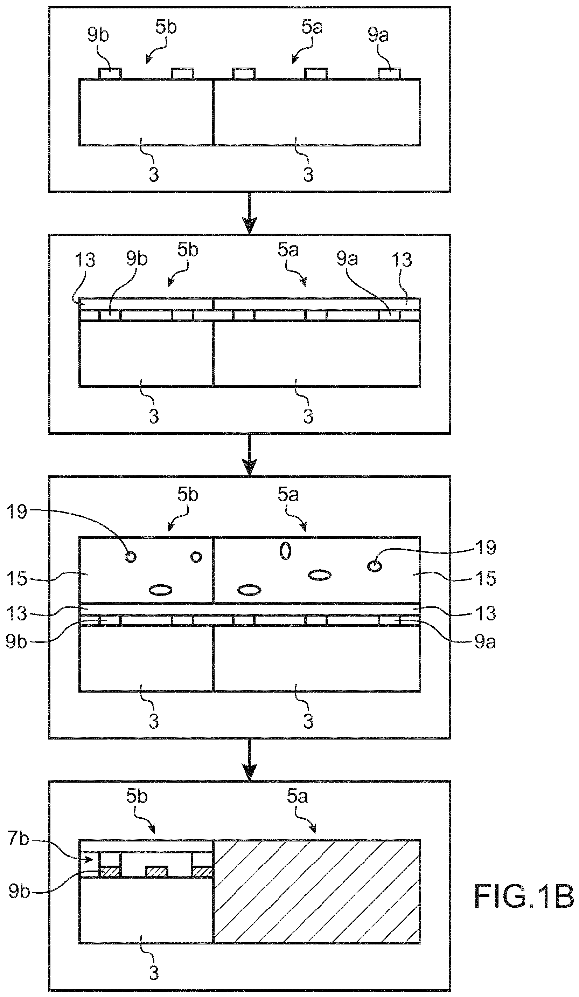

Les Figs. 1A et 1B illustrent de manière très schématique un procédé de sécurisation d'un circuit intégré, selon un mode de réalisation de l'invention.

Le procédé de sécurisation selon l'invention s'intègre parfaitement dans le procédé de fabrication en tant que tel du circuit intégré 1 sur une plaque de silicium 3. Dans le procédé de fabrication, les motifs sur la plaque de silicium 3 sont créés selon une méthode de photo-répétition rendant chaque circuit intégré identique aux autres. L'ensemble des étapes successives sont régulées et contrôlées afin d'assurer une variabilité extrêmement faible des paramètres fonctionnels des circuits intégrés. Toutefois, la méthode de fabrication comporte des étapes d'implémentations physiques intrinsèquement aléatoires introduisant des caractéristiques discernables qui assurent l'unicité ou la personnalisation de chaque circuit intégré 1 sans modifier leurs paramètres fonctionnels initiaux.

En effet, lors de la réalisation habituelle du circuit intégré 1 (ou puce électronique), le procédé de sécurisation comporte la délimitation du circuit intégré 1 en une première zone surfacique dite zone standard 5a et en une deuxième zone surfacique dite zone de sécurité 5b. La zone standard 5a correspond à la partie fonctionnelle du circuit intégré 1 de base. Cette zone 5a est occupée par les composants électroniques de base couplés par des interconnexions métalliques 7a adaptées pour réaliser les fonctions particulières du circuit. En revanche, la zone de sécurité 5b est occupée par une fonction physique non-clonable PUF destinée à sécuriser le circuit de base.

Le fait que la zone surfacique standard est distincte de la zone surfacique de sécurité et que les deux zones sont au même niveau permet de faciliter la réalisation des étapes sur les deux zones et de réduire le nombre d'étapes du procédé. L'exemple de la Fig. 1A montre le circuit de sécurité à côté du circuit fonctionnel mais bien entendu, les deux circuits peuvent être disposés différemment. Par exemple, le circuit de sécurité peut être sur une zone centrale entourée par le circuit fonctionnel. Selon encore un autre exemple, le circuit de sécurité peut être disposé sur un coin du circuit fonctionnel, etc.

La Fig. 1B montre qu'après la délimitation des zones 5a et 5b, un premier niveau de motifs conducteurs 9a, 9b est réalisé sur la surface des zones standard 5a et de sécurité 5b.

Une première multicouche 13 est déposée ensuite sur la surface du premier niveau 8 de motifs conducteurs 9a, 9b. La première multicouche 13 comprend une barrière à une diffusion métallique ainsi qu'un masque de gravure. Ensuite, une deuxième multicouche 15 est déposée sur la surface de la première multicouche 13. La deuxième multicouche 15 comprend une couche de résine chargée en particules contaminantes 19 configurées pour obstruer aléatoirement lors d'une étape de gravure de la zone de sécurité 5b une partie de trous d'interconnexion prévus dans ladite zone de sécurité 5b formant ainsi un ensemble de trous d'interconnexion aléatoire 17b.

Le procédé comprend en outre une métallisation de l'ensemble de trous d'interconnexion aléatoire 17b de la zone de sécurité 5b pour former une structure d'interconnexion aléatoire 7b définissant une fonction physique non-clonable.

Cette structure d'interconnexion aléatoire crée une fonction physique non-clonable modélisée par une continuité électrique aléatoire qui peut être interrogée par un protocole d'authentification défi-réponse.

La Fig. 2 illustre de manière très schématique une vue en coupe d'un circuit intégré sécurisé réalisé par le procédé de sécurisation selon un mode de réalisation de l'invention.

Le circuit intégré sécurisé (ou puce électronique sécurisée) comporte ainsi une zone standard 5a et une zone de sécurité 5b. La zone standard 5a comporte de manière habituelle au moins deux niveaux de pistes conductrices 9a et 11a connectées via des interconnexions métalliques 7a aux différents composants électroniques (non représentés) du circuit intégré 1.

La zone de sécurité 5b comporte une structure d'interconnexion aléatoire 7b formée entre au moins deux niveaux 8 et 10 de motifs conducteurs 9b et 11b correspondants adaptés pour tester la continuité électrique de cette structure d'interconnexion aléatoire 7b. On notera que les motifs conducteurs 9b et 11b peuvent être de forme ou de configuration quelconque selon la complexité recherchée. Par exemple, les motifs conducteurs 9b et 11b peuvent être formés par un ensemble (par exemple, quelques dizaines) de grilles ou pistes conductrices croisées ou de toute autre forme. Avantageusement, la zone de sécurité 5b peut comporter une pluralité de structures d'interconnexion aléatoire 7b (une seule est représentée) et une pluralité de niveaux correspondants de motifs conducteurs (seuls deux niveaux sont représentés) permettant ainsi d'augmenter la complexité du PUF.

La ou les structure(s) d'interconnexion aléatoire 7b modélise(nt) une continuité électrique entre les différents motifs conducteurs qui peuvent être utilisés pour appliquer un protocole d'authentification défi-réponse. Plus particulièrement, une partie des motifs conducteurs 9b et 11b est configurée pour recevoir un stimulus définissant un défi, tandis qu'une autre partie des motifs conducteurs 9b et 11b est configurée pour fournir un signal de sortie correspondant à la réponse au défi. La réponse est ainsi dépendante de la continuité électrique de la structure d'interconnexion aléatoire propre à la puce électronique ainsi qu'au défi utilisé. Les motifs conducteurs recevant le stimulus forment une entrée du circuit intégré tandis que ceux fournissant la réponse forment la sortie du circuit intégré. Les motifs conducteurs sélectionnés pour former l'entrée ou la sortie sont prédéterminés selon les spécifications du protocole d'authentification.

Chaque circuit intégré 1 issu du procédé de sécurisation dispose ainsi dans sa zone de sécurité 5b d'une structure physique d'interconnexion 7b unique dont le processus de fabrication est aléatoire et non maitrisé et par conséquent, excessivement difficile à cloner.

Après la réalisation des circuits intégrés sécurisés, on procède à une phase « d'enrôlement » (enrollment, en anglais) qui consiste à construire une base de données contenant des couples légitimes de « défi-réponse » pour chaque circuit intégré 1. Concrètement, pour chaque circuit intégré 1, un testeur génère aléatoirement un certain nombre N de défis ou challenges C et les adresse au circuit intégré 1. Chaque défi C est constitué d'un stimulus qui est appliqué à l'entrée du circuit intégré 1 et la réponse R à chaque défi C est récupérée à la sortie du circuit intégré 1. En effet, le PUF qui définit une fonction secrète F calcule la réponse R à chaque défi C (i.e. R=F(C)). Le testeur récupère les N réponses R associées aux N défis C et stocke les N couples de défi-réponse (C, R) correspondants dans une base de données (non représentée).

Ainsi, l'authentification d'un circuit intégré 1 sécurisé peut être testée tout au long de son cycle de vie. Plus particulièrement, un utilisateur d'un circuit intégré 1 peut demander au fabricant (ou à l'entité qui possède la base de données des couples de défi-réponse) un défi (ou un couple défi-réponse). Le défi C est appliqué au circuit intégré 1 et ce dernier calcule la réponse R au défi C. Ensuite, l'utilisateur (ou le fabriquant) compare la réponse R générée par le circuit intégré 1 avec celle stockée dans la base de données afin de vérifier la légitimité du circuit intégré 1. On notera que, pour plus de sécurité, le couple défi-réponse déjà utilisé est ensuite supprimé de la base de données pour éviter tout rejeu.

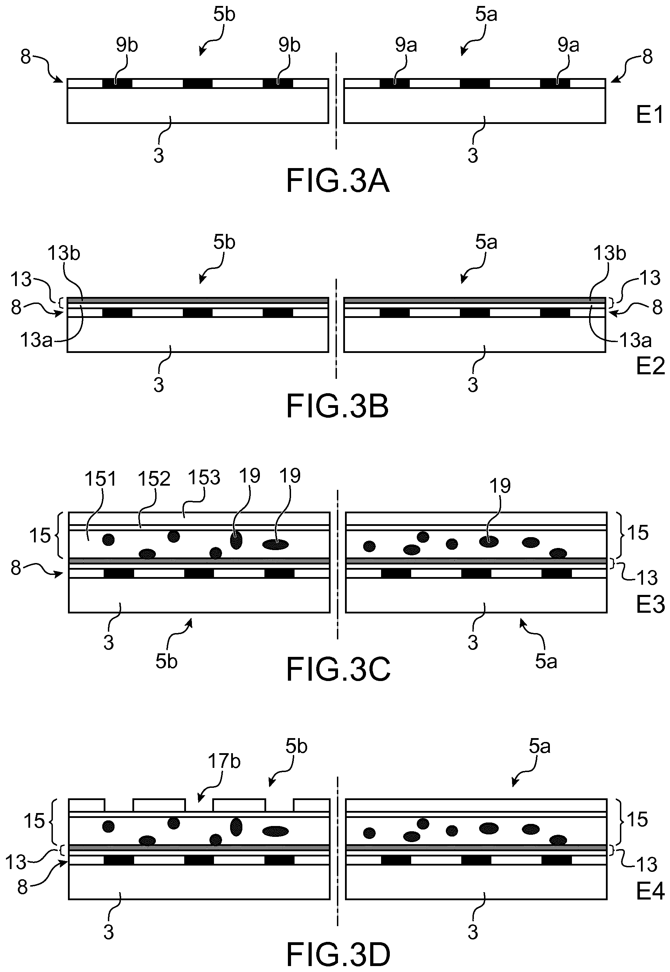

Les Figs. 3A-3J illustrent de manière très schématique des étapes d'un procédé de sécurisation d'un circuit intégré, selon un mode de réalisation préféré de l'invention.

De manière connue par l'homme du métier, on considère que la fabrication du circuit intégré 1 sur la zone standard 5a a été préalablement réalisée selon les étapes habituelles de préparation d'une couche d'oxyde sur un substrat, de transfert du dessin du circuit à reproduire à l'aide d'un masque, de gravure, de dopage, de réalisation de couches suivantes, etc.

Ainsi, on commence avec une plaque 3 délimitée en une zone de sécurité 5b et une zone standard 5a dont tout le procédé de fabrication dite « front-end » a été réalisé, c'est-à-dire que quasiment l'intégralité du circuit qu'on cherche à sécuriser a été fabriquée.

Selon ce mode de réalisation, la sécurisation du circuit intégré 1 commence alors à la fin du front-end et s'intègre dans la suite des étapes de fabrication de composés semi-conducteur au niveau du « back-end », c'est-à-dire, lors de la réalisation des premières interconnexions électriques pour adéquatement interconnecter les composants entre eux ainsi qu'avec des électrodes d'entrées-sorties.

La Fig. 3A illustre de manière très schématique une première étape du procédé de sécurisation.

La première étape E1 (Fig. 3A) consiste en la réalisation d'un premier niveau 8 de motifs conducteurs 9a et 9b sur la surface des zones standard 5a et de sécurité 5b de la plaque 3. Les motifs conducteurs 9a et 9b peuvent être en cuivre, en aluminium ou en un autre matériau conducteur d'électricité. On notera que cette étape peut être considérée comme une dernière étape déjà réalisée au niveau du « front-end » du procédé de fabrication du circuit intégré.

La deuxième étape E2 (Fig. 3B) consiste à déposer une première multicouche 13 sur la surface du premier niveau 8 comprenant les motifs conducteurs 9a et 9b. La première multicouche 13 comprend une barrière à une diffusion métallique 13a ainsi qu'un masque dur de gravure 13b. Cette première multicouche 13 est par exemple une bicouche composée d'une couche de SiN ayant la fonction de barrière 13a et d'une couche de SiO₂ ayant la fonction de masque de gravure 13b.

La troisième étape E3 (Fig. 3C) consiste à déposer une deuxième multicouche 15 de résine photosensible comprenant des particules contaminantes 19 sur les zones standard 5a et de sécurité 5b.

Avantageusement, la deuxième multicouche 15 consiste d'un empilement de sous-couches pouvant être composé à titre d'exemple, d'une première couche de masque de gravure de type couche organique carbonée SOC (Spin On Carbon) 151, d'une deuxième couche de masque de gravure de type couche organique enrichie en silicium SiARC (Silicon Anti Reflective Coating) 152 ainsi que d'une troisième couche de résine photosensible 153. Les épaisseurs de ces trois couches peuvent varier selon la nature des produits employés ainsi que les dimensions des trous d'interconnexion dits « vias » visées. Elles sont typiquement de l'ordre de 150nm pour la première couche SOC 151, de l'ordre de 30nm pour la deuxième couche SiARC 152 et de l'ordre de 100nm pour la troisième couche de résine photosensible 153. Toutes ces couches 151, 152, 153 peuvent être déposées par la méthode connue de revêtement par tournette (spin coating, en anglais).

Avantageusement, les particules contaminantes 19 sont ajoutées dans la première couche de masque de gravure SOC 151 (dite film de polymère ou film de SOC) avant le revêtement par tournette. La taille, la forme et le matériau des particules 19 sont avantageusement choisis de façon adéquate pour optimiser leur distribution sur les trous d'interconnexion de la façon la plus aléatoire possible. Plus particulièrement, les particules contaminantes 19 sont des nanoparticules constituées d'un matériau en diélectrique, en métal ou en polymère. A titre d'exemple, ce matériau peut être réalisé en silicium Si, en dioxyde de silicium SiO2, en Al2O3, en nitrure de silicium ou en tout autre matériau compatible avec les procédés Front End. La taille des nanoparticules est choisie en fonction de la dimension des trous d'interconnexion visés, ces derniers ayant une forme générale cylindrique. Plus particulièrement, les nanoparticules 19 présentent un diamètre sensiblement égal ou supérieur à celui des trous d'interconnexion. On notera que la taille des particules peut également être invariablement plus grande ou plus petite que les trous d'interconnexion mais dans ce cas, c'est la valeur moyenne de la distribution des tailles qui est sensiblement égale ou supérieure à celui des vias.

Par ailleurs, les nanoparticules 19 présentent une concentration suffisamment faible comprise entre environ 0,1% à 20% en masse sélectionnée selon la taille des particules. Dans ces limites, la concentration ne modifie quasiment pas les propriétés de couchages du film de SOC 151 et permet en outre d'avoir une distribution très homogène dans ce film 151. Ceci permet de désactiver un nombre optimal de trous d'interconnexion sans obstruer l'intégralité de ces trous. Plus particulièrement, la concentration des nanoparticules 19 est ajustée en fonction de la densité des motifs du circuit et la proportion des interconnexions électriques que l'on cherche à supprimer.

Avantageusement, la surface des nanoparticules 19 est traitée pour que ses propriétés physico-chimiques de surface soient compatibles avec la nature chimique du film de SOC 151. Ceci permet d'augmenter l'efficacité du procédé en optimisant la dispersion des nanoparticules 19 dans le film 151 de polymère et en évitant la formation des agrégats de particules dans ce film 151.

On notera que le film de SOC 151 ne présente aucune spécificité particulière pour les étapes de lithographie et par conséquent, l'ajout des nanoparticules dans cette première couche 151 permet avantageusement de conserver les mêmes étapes de lithographie que dans un procédé standard. En outre, le film de SOC 151 est assez épais et permet facilement de contenir les nanoparticules 19. Toutefois, il est possible de les insérer dans la troisième couche de résine 153 ou même dans la fine deuxième couche de SiArc 152.

La quatrième étape E4 (Fig. 3D) consiste à procéder à une lithographie optique dans la zone de sécurité 5b pour insoler les trous d'interconnexion 17b prévue dans cette zone 5b. La résine est développée et les motifs sont transférés dans le SiArc.

En variante, la lithographie peut être de type électronique, EUV, nano impression ou de tout autre type.

La zone standard 5a reste protégée par la deuxième multicouche 15 de résine photosensible. Ainsi, la lithographie optique est réalisée uniquement sur le circuit de sécurité. Ainsi, les particules 19 obstruent partiellement ou totalement de manière aléatoire une partie des trous d'interconnexion 17b de la zone de sécurité 5b. Cette répartition aléatoire des nanoparticules dans la couche de SOC va permettre de stopper partiellement ou totalement l'ouverture du SOC lors de l'étape de gravure. Cette étape montre bien que le caractère aléatoire est ainsi dans le procédé de fabrication et non pas dans des masques ou gravures différentes.

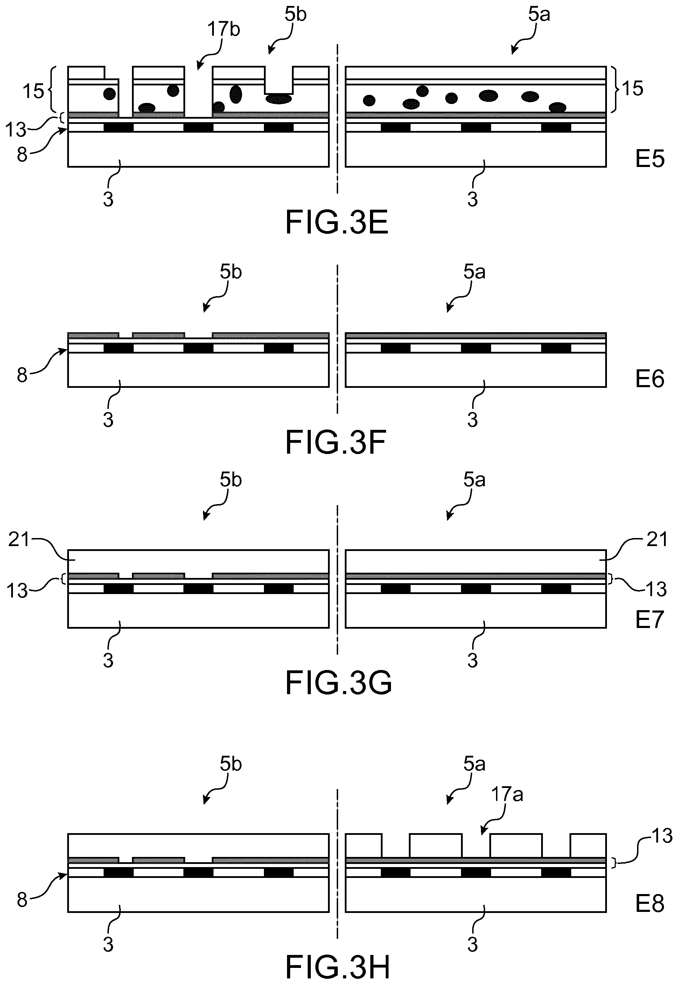

La cinquième étape E5 (Fig. 3E) consiste à transférer des trous d'interconnexion 17b obstrués ou non obstrués dans le masque de gravure. Le film de SOC 151 chargé en nanoparticules 19 est ouvert par un procédé de gravure sèche (par exemple, à base d'oxygène) pour reproduire les motifs réalisés en lithographie. La nature chimique des nanoparticules est choisie de telle sorte que le plasma pour ouvrir le SOC ne gravera pas les nanoparticules. Par exemple, si le plasma pour ouvrir le SOC est essentiellement à base d'oxygène, des nanoparticules de type silicium Si, dioxyde de silicium SiO2, Al2O3, ou nitrure de silicium. Les nanoparticules peuvent aussi être réalisées en métaux compatibles avec les exigences de contaminations métalliques du composant développé.

A l'issu de la structuration de la zone de sécurité 5b, la sixième étape E6 (Fig. 3F) consiste à nettoyer la surface des zones standard 5a et de sécurité 5b afin de retirer la deuxième multicouche 15 de résine photosensible et les particules contaminantes 19. On obtient à nouveau un état de surface propre à la réalisation de la lithographie et gravure dans la zone standard.

Avantageusement, pour le retrait de la deuxième multicouche 15, on peut utiliser un procédé de gravure sèche présentant une bonne sélectivité de gravure entre les nanoparticules et les couches barrières. Toutefois, si la sélectivité de gravure n'est pas suffisante on peut alors ajouter une couche barrière tampon au-dessus de celles utilisés pour le procédé de réalisation des pistes métalliques. Cette nouvelle couche tampon est réalisée en un matériau de type diélectrique ou métallique permettant de retirer les nanoparticules de manière sélective. Par exemple, si les nanoparticules sont à base de SiO2 on peut utiliser une couche tampon de type SiN ou TiN.

La septième étape E7 (Fig. 3G) reprend le cours de fabrication habituel du circuit comme initialement prévu dans la zone standard 5a. Ainsi, au moins une troisième multicouche (ou couche) 21 de résine photosensible est d'abord déposée sur la surface des zones standard 5a et de sécurité 5b. Ensuite, on procède à une lithographie optique dans la zone standard 5a pour isoler les trous d'interconnexion 17a prévus dans cette zone 5a.

La huitième étape E8 (Fig. 3H) consiste à transférer les trous d'interconnexion 17a de la zone standard 5a dans le masque de gravure. Ensuite, la surface des zones standard 5a et de sécurité 5b est re-nettoyée pour retirer la troisième multicouche 21 de résine photosensible.

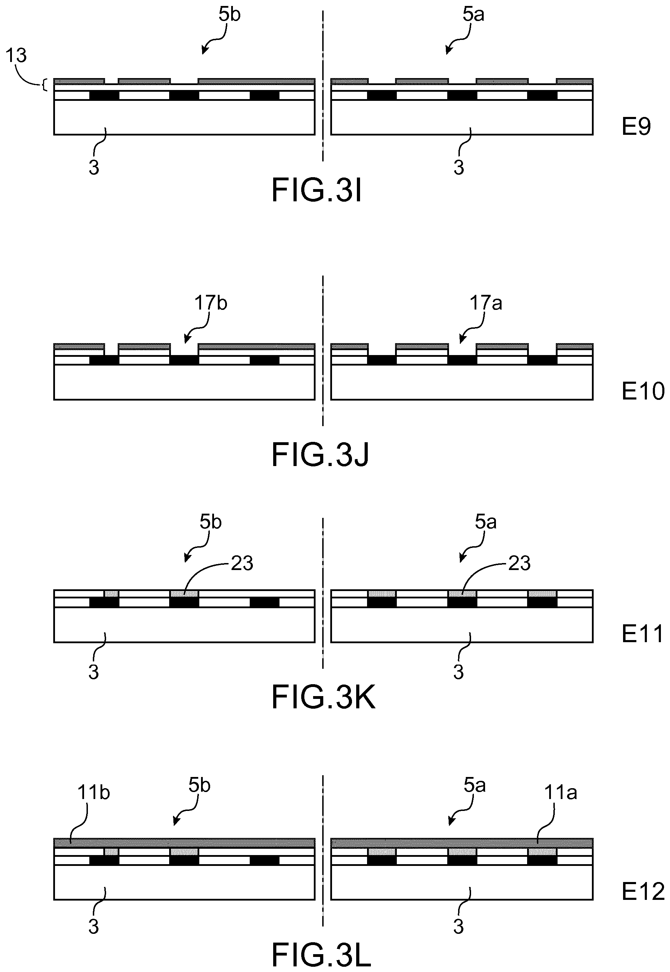

Les neuvième et dixième étapes E9-E10 (Figs. 3I et 3J) consistent à transférer les trous d'interconnexion 17a et 17b de la zone standard 5a et de la zone de sécurité 5b dans la couche de barrière à diffusion métallique.

La onzième étape E11 (Fig. 3K) consiste à remplir les trous d'interconnexion 17a et 17b par un métal 23 par exemple, en cuivre ou en aluminium. Le remplissage peut être réalisé de manière sélective afin de ne pas remplir les plus petites ouvertures.

La douzième étape E12 (Fig. 3L) consiste à réaliser un deuxième niveau de motifs conducteurs 11a, 11b sur la surface des zones standard 5a et de sécurité 5b respectivement.

Ce mode de réalisation montre que l'ensemble des étapes successives sont régulées et contrôlées afin d'assurer une variabilité extrêmement faible des paramètres clés de fonctionnalité du circuit dans la zone standard 5a tout en permettant par construction une réalisation non maitrisée de la structure aléatoire d'interconnexion 7b dans la zone de sécurité 5b. Ceci renforce l'unicité de chaque puce électronique 1 permettant son identification de manière très précise tout en rendant le clonage extrêmement difficile.

Avantageusement, afin d'éviter toute variation par vieillissement, on procède à un traitement électrique pour supprimer les interconnexions partielles fragiles dans la zone de sécurité 5b. Plus particulièrement, on applique une tension supérieure à la tension de lecture pour claquer les interconnexions partielles très fines ayant une résistance trop élevée. En outre, pour tester l'authenticité d'un circuit intégré 1, on peut lui appliquer un signal de défi présentant une intensité de courant très faible qui préserve l'identité du circuit tout au long de son cycle de vie.

On notera que le mode de réalisation du procédé de sécurisation selon les Figs. 3A-3J est transposable au « Front End », c'est-à-dire, lors de la fabrication des circuits logiques.

## Revendications

1. Procédé de sécurisation d'un circuit intégré lors de sa réalisation, ledit procédé comportant les étapes suivantes :
- délimitation dudit circuit intégré (1) en une première zone dite zone standard (5a) et en une deuxième zone dite zone de sécurité (5b), ladite zone standard comprenant au moins deux niveaux de pistes conductrices (9a, 11a) connectées entre elles et à des composants électroniques via des interconnexions métalliques,
- introduction d'une couche de résine chargée en particules contaminantes (19) configurées pour obstruer aléatoirement lors d'une étape de gravure de la zone de sécurité (5b) une partie de trous d'interconnexion prévus dans ladite zone de sécurité (5b) formant ainsi un ensemble de trous d'interconnexion aléatoire (17b), et
- métallisation dudit ensemble de trous d'interconnexion aléatoire (17b) de la zone de sécurité (5b) pour former une structure d'interconnexion aléatoire (7b) adaptée pour que sa continuité électrique puisse être testée, définissant ainsi une fonction physique non-clonable, ladite structure d'interconnexion aléatoire (7b) étant formée entre au moins deux niveaux (8, 10) de motifs conducteurs (9b, 11b) aux mêmes niveaux que les pistes conductrices dans la zone standard.

2. Procédé selon la revendication 1, **caractérisé en ce que** les particules contaminantes (19) sont des nanoparticules constituées d'un matériau de type diélectrique ou métallique sélectionné parmi les matériaux suivants : silicium, dioxyde de silicium SiO2, métal TiN.

3. Procédé selon la revendication 1 ou 2, **caractérisé en ce que** les particules contaminantes (19) présentent un diamètre sensiblement égal ou supérieur à celui des trous d'interconnexion.

4. Procédé selon l'une quelconque des revendications précédentes, **caractérisé en ce que** les particules contaminantes (19) présentent une concentration comprise entre environ 0,1% à 20% en masse sélectionnée selon la taille des particules.

5. Procédé selon l'une quelconque des revendications précédentes, **caractérisé en ce que** la sécurisation du circuit intégré s'intègre au niveau de la réalisation de premières interconnexions électriques et comporte en outre les étapes suivantes :
- réalisation d'un premier niveau (8) de motifs conducteurs (9a, 9b) sur la surface desdites zones standard (5a) et de sécurité (5b),
- dépôt sur la surface du premier niveau (8) de motifs conducteurs (9a, 9b) d'une première multicouche (13) comprenant une barrière à une diffusion métallique ainsi qu'un masque de gravure,
- dépôt sur la surface de la première multicouche (13) d'une deuxième multicouche (15) de résine photosensible comprenant ladite couche de résine chargée en particules contaminantes (19),
- lithographie optique dans la zone de sécurité (5b) pour isoler les trous d'interconnexion (17b) prévus dans cette zone de sécurité, la zone standard restant protégée par la deuxième multicouche (15),
- transfert des trous d'interconnexion de la zone de sécurité (5b) non obstrués ou obstrués par des particules contaminantes dans le masque de gravure,
- nettoyage de la surface des zones standard (5a) et de sécurité (5b) pour retirer la deuxième multicouche (15).

6. Procédé selon la revendication 5, **caractérisé en ce que** la deuxième multicouche (15) comprend une première couche de masque de gravure de type couche organique enrichie en carbone SOC (151), une deuxième couche de masque de gravure de type couche organique enrichie en silicium SiARC (152) et une troisième couche de résine photosensible (153), les particules contaminantes (19) étant comprises dans ladite première couche de masque de gravure SOC (151).

7. Procédé selon la revendication 6, **caractérisé en ce qu'**il comporte en outre les étapes suivantes :
- dépôt sur la surface des zones standard (5a) et de sécurité (5b) d'au moins une troisième multicouche (21) de résine photosensible,
- lithographie optique dans la zone standard (5a) pour isoler les trous d'interconnexion (17a) prévus dans la zone standard (5a),
- transfert des trous d'interconnexion (17a) de la zone standard (5a) dans le masque de gravure,
- re-nettoyage de la surface des zones standard (5a) et de sécurité (5b) pour retirer la troisième multicouche (21) de résine photosensible,
- transfert dans la couche de barrière à diffusion métallique et remplissage par un métal (23) des trous d'interconnexion (17a, 17b) dans les zones standard (5a) et de sécurité (5b), et
- réalisation d'un deuxième niveau (10) de motifs conducteurs (11a, 11b) sur la surface des zones standard (5a) et de sécurité (5b).

8. Procédé selon l'une quelconque des revendications précédentes, **caractérisé en ce qu'**il comporte une application d'une tension supérieure à une tension de lecture pour claquer des interconnexions partielles fragiles.

9. Procédé selon l'une quelconque des revendications précédentes, **caractérisé en ce que** la structure d'interconnexion aléatoire (7b) modélise une continuité électrique aléatoire interrogeable par un protocole d'authentification défi-réponse, ladite structure d'interconnexion aléatoire (7b) étant formée entre au moins deux niveaux (8, 10) correspondants de motifs conducteurs (9b, 11b), une partie des motifs conducteurs étant configurée pour recevoir un défi, tandis qu'une autre partie des motifs conducteurs est configurée pour fournir la réponse audit défi.

10. Procédé selon l'une quelconque des revendications précédentes, **caractérisé en ce qu'**il comporte la réalisation d'une pluralité de structures d'interconnexion aléatoire entre au moins deux niveaux de motifs conducteurs.

11. Procédé selon l'une quelconque des revendications précédentes, **caractérisé en ce que** la sécurisation du circuit intégré est réalisée au niveau de la fabrication de circuits logiques.

## Patentansprüche

1. Verfahren zur Sicherung einer integrierten Schaltung bei ihrer Ausführung auf einer Platte, wobei das Verfahren die folgenden Schritte aufweist:
- Begrenzen der integrierten Schaltung (1) in einen ersten Bereich, den Standardbereich (5a), und in einen zweiten Bereich, den Sicherheitsbereich (5b), wobei der Standardbereich mindestens zwei Ebenen von Leiterbahnen (9a, 11a) umfasst, die über metallische Verbindungen miteinander und mit elektronischen Komponenten verbunden sind,
- Einbringen einer Harzschicht (19), die mit Verunreinigungspartikeln beladen ist, die so ausgebildet sind, dass sie bei einem Ätzschritt des Sicherheitsbereichs (5b) zufällig einen Teil der in dem Sicherheitsbereich (5b) vorgesehenen Verbindungslöcher verschließt, wodurch eine Gruppe von zufälligen Verbindungslöchern (17b) gebildet wird, und
- Metallisieren der Gruppe von zufälligen Verbindungslöchern (17b) des Sicherheitsbereichs (5b), um eine zufällige Verbindungsstruktur (7b) zu bilden, die so ausgelegt ist, dass ihre elektrische Kontinuität getestet werden kann, wodurch eine nicht klonbare physikalische Funktion definiert wird, wobei die zufällige Verbindungsstruktur (7b) zwischen mindestens zwei Ebenen (8, 10) von leitenden Mustern (9b, 11b) auf denselben Ebenen wie die leitenden Bahnen im Standardbereich gebildet ist.

2. Verfahren nach Anspruch 1, **dadurch gekennzeichnet, dass** die Verunreinigungspartikel (19) Nanopartikel sind, die aus einem Material des dielektrischen oder metallischen Typs bestehen, das aus den folgenden Materialien ausgewählt ist: Silizium, Siliziumdioxid SiO2, Metall TiN.

3. Verfahren nach Anspruch 1 oder 2, **dadurch gekennzeichnet, dass** die Verunreinigungspartikel (19) einen Durchmesser aufweisen, der im Wesentlichen gleich oder größer ist als der der Verbindungslöcher.

4. Verfahren nach einem der vorstehenden Ansprüche, **dadurch gekennzeichnet, dass** die Verunreinigungspartikel (19) eine Konzentration zwischen etwa 0,1 % und 20 % Masse aufweisen, die je nach Partikelgröße ausgewählt ist.

5. Verfahren nach einem der vorstehenden Ansprüche, **dadurch gekennzeichnet, dass** die Sicherung der integrierten Schaltung in die Herstellung erster elektrischer Verbindungen integriert ist und darüber hinaus die folgenden Schritte aufweist:
- Herstellen einer ersten Ebene (8) leitender Muster (9a, 9b) auf der Oberfläche der Standard- (5a) und Sicherheitsbereiche (5b),
- Ablagern von leitenden Mustern (9a, 9b) einer ersten Mehrschichtstruktur (13), die eine Barriere gegen Metalldiffusion sowie eine Ätzmaske umfasst, auf die Oberfläche der ersten Ebene (8),
- Ablagern einer zweiten Mehrschicht (15) aus lichtempfindlichem Harz, die die mit Verunreinigungspartikeln beladene Harzschicht (19) umfasst, auf der Oberfläche der ersten Mehrschicht (13),
- optisches Lithographieren im Sicherheitsbereich (5b), um die in diesem Sicherheitsbereich vorgesehenen Verbindungslöcher (17b) zu isolieren, wobei der Standardbereich durch die zweite Mehrschicht (15) geschützt bleibt,
- Übertragen der durch Verunreinigungspartikel verstopften oder nicht verstopften Verbindungslöcher aus dem Sicherheitsbereich (5b) in die Ätzmaske,
- Reinigen der Oberfläche der Standard- (5a) und Sicherheitsbereiche (5b) zum Entfernen der zweiten Mehrschicht (15).

6. Verfahren nach Anspruch 5, **dadurch gekennzeichnet, dass** die zweite Mehrschicht (15) eine erste Schicht einer Ätzmaske vom Typ der kohlenstoffangereicherten organischen Schicht SOC (151), eine zweite Schicht einer Ätzmaske vom Typ der siliziumangereicherten organischen Schicht SiARC (152) und eine dritte Schicht eines lichtempfindlichen Harzes (153) umfasst, wobei die Verunreinigungspartikel (19) in der ersten Schicht der Ätzmaske SOC (151) enthalten sind.

7. Verfahren nach Anspruch 6, **dadurch gekennzeichnet, dass** es ferner die folgenden Schritte aufweist:
- Ablagern mindestens einer dritten Mehrschicht (21) aus lichtempfindlichem Harz auf der Oberfläche der Standard- (5a) und Sicherheitsbereiche (5b),
- optisches Lithographieren im Standardbereich (5a) zum Isolieren der im Standardbereich (5a) vorgesehenen Verbindungslöcher (17a),
- Übertragen der Verbindungslöcher (17a) des Standardbereichs (5a) in die Ätzmaske,
- erneutes Reinigen der Oberfläche der Standard- (5a) und Sicherheitsbereiche (5b) zum Entfernen der dritten Mehrschicht (21) aus lichtempfindlichem Harz,
- Übertragen in die metallische Diffusionsbarriereschicht und Füllen der Verbindungslöcher (17a, 17b) in den Standard- (5a) und Sicherheitsbereichen (5b) mit Metall (23), und
- Herstellen einer zweiten Ebene (10) von leitenden Mustern (11a, 11b) auf der Oberfläche der Standard- (5a) und Sicherheitsbereiche (5b).

8. Verfahren nach einem der vorstehenden Ansprüche, **dadurch gekennzeichnet, dass** es ein Anlegen einer Spannung aufweist, die größer ist als eine Lesespannung, um empfindliche Teilverbindungen zu brechen.

9. Verfahren nach einem der vorhergehenden Ansprüche, **dadurch gekennzeichnet, dass** die zufällige Verbindungsstruktur (7b) eine zufällige elektrische Kontinuität modelliert, die durch ein Frage-Antwort-Authentifizierungsprotokoll abgefragt werden kann, wobei die zufällige Verbindungsstruktur (7b) zwischen mindestens zwei entsprechenden Ebenen (8, 10) von leitenden Mustern (9b, 11b) gebildet ist, wobei ein Teil der leitenden Muster so ausgebildet ist, dass er eine Frage empfängt, während ein anderer Teil der leitenden Muster so ausgebildet ist, dass er die Antwort auf diese Frage liefert.

10. Verfahren nach einem der vorstehenden Ansprüche, **dadurch gekennzeichnet, dass** es die Herstellung einer Vielzahl von zufälligen Verbindungsstrukturen zwischen mindestens zwei Ebenen von leitenden Mustern aufweist.

11. Verfahren nach einem der vorstehenden Ansprüche, **dadurch gekennzeichnet, dass** die Sicherung der integrierten Schaltung auf der Ebene der Herstellung von Logikschaltungen erfolgt.

## Claims

1. Method for securing an integrated circuit during the realisation thereof, said method comprising the following steps:
- delimiting of said integrated circuit (1) into a first zone referred to as standard zone (5a) and into a second zone referred to as security zone (5b), said standard zone comprising at least two levels of conductive tracks (9a, 11a) connected to one another and to electronic components via metallic interconnections,
- introducing of a layer of resin loaded with contaminant particles (19) configured to randomly obstruct during a step of etching of the security zone (5b) a portion of the vias provided in said security zone (5b) thus forming a random set of vias (17b), and
- metalizing of said random set of vias (17b) of the security zone (5b) in order to form a random interconnection structure (7b) adapted so that its electrical continuity can be tested, thereby defining a physical unclonable function, said random interconnection structure (7b) being formed between at least two levels (8, 10) of conductive patterns (9b, 11b) at the same levels as the conductive tracks of the standard zone.

2. Method according to claim 1, **characterised in that** the contaminant particles (19) are nanoparticles formed from a material of the dielectric or metallic type selected from the following materials: silicon, silicon dioxide SiO2, silicon, metal TiN.

3. Method according to claim 1 or 2, **characterised in that** the contaminant particles (19) have a diameter that is substantially greater than or equal to that of the vias.

4. Method according to any preceding claim, **characterised in that** the contaminant particles (19) have a concentration between about 0.1% to 20% by mass selected according to the size of the particles.

5. Method according to any preceding claim, **characterised in that** the securing of the integrated circuit is integrated on the realisation of the first vias and further comprises the following steps:
- realising a first level (8) of conductive patterns (9a, 9b) on the surface of said standard (5a) and security (5b) zones,
- depositing on the surface of the first level (8) of conductive patterns (9a, 9b) of a first multilayer (13) comprising a metal diffusion barrier as well as an etching mask,
- depositing on the surface of the first multilayer (13) of a second multilayer (15) of photosensitive resin comprising said resin layer loaded with contaminant particles (19),
- optical lithography in the security zone (5b) for insulating the vias (17b) provided in this security zone, with the standard zone remaining protected by the second multilayer (15),
- transferring of the vias of the security zone (5b) non-obstructed or obstructed by contaminant particles in the etching mask,
- cleaning of the surface of the standard (5a) and security (5b) zones in order to remove the second multilayer (15).

6. Method according to claim 5, **characterised in that** the second multilayer (15) comprises a first layer of etching mask of the carbon-enriched organic layer type SOC (151), a second layer of etching mask of the silicon-enriched organic layer type SiARC (152) and a third layer of photosensitive resin (153), the contaminant particles (19) being comprised in said first layer of etching mask SOC (151).

7. Method according to claim 6, **characterised in that** it further comprises the following steps:
- depositing on the surface of the standard (5a) and security (5b) zones of at least one third multilayer (21) of photosensitive resin,
- optical lithography in the standard zone (5a) for insulating the vias (17a) provided in the standard zone (5a),
- transferring of the vias (17a) of the standard zone (5a) in the etching mask,
- re-cleaning of the surface of the standard (5a) and security (5b) zones in order to remove the third multilayer (21) of photosensitive resin,
- transferring in the metal diffusion barrier layer and filling by a metal (23) of the vias (17a, 17b) in the standard (5a) and security (5b) zones, and
- realising of a second level (10) of conductive patterns (11a, 11b) on the surface of the standard (5a) and security (5b) zones.

8. Method according to any preceding claim, **characterised in that** it comprises an application of a voltage greater than a reading voltage in order to break down fragile partial vias.

9. Method according to any preceding claim, **characterised in that** the random interconnection structure (7b) models a random electrical continuity that can be queried by a challenge-response authentication protocol, said random interconnection structure (7b) being formed between at least two corresponding levels (8, 10) of conductive patterns (9b, 11b), with a portion of the conductive patterns being configured to receive a challenge, while another portion of the conductive patterns is configured to supply the response to said challenge.

10. Method according to any preceding claim, **characterised in that** it comprises the realisation of a plurality of random interconnection structures between at least two levels of conductive patterns.

11. Method according to any preceding claim, **characterised in that** the securing of the integrated circuit is realised at the manufacturing of logic circuits.
